**Europäisches Patentamt**

**European Patent Office**

**Office européen des brevets**

(19)

(11) Veröffentlichungsnummer : **0 399 993 B1**

(12)                **EUROPÄISCHE PATENTSCHRIFT**

(45) Veröffentlichungstag der Patentschrift :
16.03.94 Patentblatt 94/11

(51) Int. Cl.$^5$ : **C25B 1/22**

(21) Anmeldenummer : **90890148.1**

(22) Anmeldetag : **14.05.90**

(54) **Verfahren zur stufenweisen Membran-Elektrolyse von alkalisulfathältigen, wässerigen Lösungen sowie Vorrichtung zur Durchführung des Verfahrens.**

(30) Priorität : **22.05.89 AT 1225/89**

(43) Veröffentlichungstag der Anmeldung :
**28.11.90 Patentblatt 90/48**

(45) Bekanntmachung des Hinweises auf die
Patenterteilung :
**16.03.94 Patentblatt 94/11**

(84) Benannte Vertragsstaaten :
**AT BE DE ES FR GB IT NL SE**

(56) Entgegenhaltungen :
**EP-A- 0 124 007**
**EP-A- 0 124 087**
**GB-A- 431 695**
**SU-A- 916 601**

(73) Patentinhaber : **Lenzing Aktiengesellschaft**
**A-4860 Lenzing (AT)**

(72) Erfinder : **Schmidt, Heinrich, Dr.**
**Oberstadtgries 9**
**A-4840 Vöcklabruck (AT)**
Erfinder : **Boxan, Christoph, Dr.**
**Hauptstrasse 36**
**A-4860 Lenzing (AT)**
Erfinder : **Kalleitner, Johann**
**Fischerstrasse 14**
**A-4861 Schörfling (AT)**

(74) Vertreter : **Schwarz, Albin, Dr.**
**Albertgasse 10/8 Postfach 224**
**A-1081 Wien (AT)**

EP 0 399 993 B1

## Beschreibung

Die Erfindung betrifft ein Verfahren zur stufenweisen Membran-Elektrolyse von alkalisulfathältigen, wässerigen Lösungen, wobei diese Lösungen durch eine Mehrzahl von in Serie arbeitenden 3-Kammer-Elektrolysezellen geleitet werden, welche jeweils eine Anoden-, eine Mittel- und eine Kathodenkammer aufweisen, die durch zwei Ionenaustauschermembranen voneinander getrennt sind, und die alkalisulfathältigen Lösungen zumindest teilweise in die Mittelkammer der ersten Elektrolysezelle eingebracht werden, sowie eine Vorrichtung zur Durchführung des Verfahrens.

Sulfathältige wässerige Lösungen fallen als Abfallprodukte bei den verschiedensten chemieindustriellen Prozessen an. Diese Lösungen müssen entsorgt werden. Dazu werden sie heutzutage meist eingedampft, wobei die Salze - soweit möglich - in fester Form nach aufwendiger Reinigung und Trocknung anderweitig verwendet werden.

Bei einer umweltbewußten Prozeßführung müßte der Chemikalienkreislauf geschlossen werden, indem die Sulfate in den Primärprozeß zurückgeführt werden. Beispielsweise würde das beim Xanthogenatprozeß bedeuten, daß die sulfathältige Lösung, die im Spinnbad anfällt, wieder zu Schwefelsäure und Lauge aufgearbeitet werden muß, um die Schwefelsäure in das Spinnbad und die Lauge zur Xanthogenatherstellung rückführen zu können.

Seit Jahren wird versucht, Elektrolyseverfahren zu entwickeln, um eine derartige Aufarbeitung kostengünstig durchführen zu können. In der SU-A - 701 961 ist beispielsweise ein Verfahren beschrieben, nach welchem die Spaltung des Sulfates mit Hilfe eines 3-Kammer-Elektrodialysators durchgeführt wird. Dieser ist eine Elektrolysevorrichtung, welche durch eine Anionen- und eine Kationenaustauschermembran in drei Kammern unterteilt ist, und in welcher $Na_2SO_4$ in die Spaltprodukte $H_2SO_4$ und $NaOH$, jeweils in Form ihrer wässerigen Lösung, elektrolytisch gespalten wird. Die $Na_2SO_4$-Lösung wird dabei in die Mittelkammer eingespeist und die mehr oder weniger konzentrierten Produkt-Lösungen aus den jeweiligen Elektrodenräumen abgezogen.

Ein Elektrodialysator gleicher Bauart wird auch in der DE-A - 3 529 649 beschrieben, bei welcher allerdings nicht reine $Na_2SO_4$-Lösungen in Wasser, sondern $Na_2SO_4$- und $H_2SO_4$-hältige Lösungen, wie sie z.B. in der Viskosefaserindustrie anfallen, elektrolysiert werden. Die $Na_2SO_4$-hältigen Lösungen werden hierbei entweder zur Gänze in die Mittelkammer und dann aus dieser in die Anodenkammer geleitet oder in zwei Teilströme getrennt, in die beiden genannten Kammern gleichzeitig eingespeist und danach wieder vereinigt.

Die im Spinnbad in den aufzuarbeitenden Lösungen enthaltenen Verunreinigungen führen aber zu extrem kurzen Standzeiten sowohl der Membranen als auch der Anoden. So wird z.B. durch einen Gehalt an Calciumionen, welche aus der sauren Lösung durch Kationentauscher nicht entfernbar sind, die kathodenseitige Membran bereits innerhalb einiger Wochen irreversibel geschädigt, wodurch nicht nur die Spannung steigt und die Stromausbeute fällt, sondern auch die Durchlässigkeit für die Sulfationen stark zunimmt.

Des weiteren wird durch eine hohe Konzentration an organischen Verunreinigungen, welche sich weder durch handelsübliche Aktivkohlen noch durch Adsorptionsharze ausreichend entfernen lassen, auch die teure elektrokatalytische Beschichtung der Anode angegriffen, was sich in einem zuerst langsamen, dann aber immer schneller werdenden Spannungsanstieg zeigt.

Für die Elektrolyse von $Na_2SO_4$, $H_2SO_4$ und Erdalkaliionen enthaltenden Lösungen ist aus der EP-A - 0 124 087 ein Verfahren bekannt, das mit einer aus zwei Kationenaustauschermembranen bestehenden 3-Kammerzelle arbeitet. In dieser Elektrolysevorrichtung wird der Anodenraum nicht wie in den vorhin beschriebenen Elektrodialysatoren durch eine Anionen-, sondern durch eine Kationenaustauschermembran von der Mittelkammer getrennt. Die Elektrodialyse wird dabei in der Weise durchgeführt, daß die aufzuarbeitende Lösung allein in den Anodenraum gespeist wird, während in den Mittelraum eine von Erdalkaliionen freie $Na_2SO_4$-Lösung geleitet wird. Wegen der von der Anodenseite durch die Kationenmembran ständig eindringenden Erdalkaliionen (zumeist $Ca^{2+}$ und $Mg^{2+}$) ist aber eine laufende Reinigung dieser als Puffer dienenden Mittelkammerlösung erforderlich. Dieser Reinigungsprozeß erweist sich als ziemlich aufwendig.

Eine Weiterentwicklung des in der oben genannten SU-A - 701 961 beschriebenen Elektrodialyseverfahrens ist der SU-A - 916 601 zu entnehmen, jedoch sind dort zwecks Erreichung eines besseren Zersetzungsgrades des $Na_2SO_4$ in seine Spaltprodukte fünf derartige Dialysatoren plus ein 2-Kammer-Elektrolyseur derart miteinander verbunden, daß diese von den Elektrolytlösungen hintereinander durchflossen werden, wobei letztere stufenweise aufkonzentriert werden.

Neben der gewünschten Erhöhung des Zersetzungsgrades von 40 % (bei nur einer Zelle) auf 96 bis 97 % resultiert dabei zwangsläufig auch eine Erhöhung der Stromausbeute von 40 bis 46 % auf 70 %. Die dabei erhaltenen Produktkonzentrationen liegen jedoch nur bei maximal 10 Gew.% an $NaOH$ und 12 Gew.% $H_2SO_4$.

Alle genannten Verfahren haben den Nachteil, daß sie keine zufriedenstellende kostengünstige Aufarbeitung der Lösungen ermöglichen, da die Stromausbeuten bei maximal 70 % liegen und gleichzeitig nur relativ verdünnte Lösungen von Natronlauge und Schwefelsäure herstellbar sind. Außerdem sind die Standzeiten ein-

EP 0 399 993 B1

zelner Vorrichtungsteile unbefriedigend.

Die Erfindung setzt sich zum Ziel, ein Verfahren zur stufenweisen Elektrolyse von alkalisulfathältigen, wässerigen Lösungen zur Verfügung zu stellen, das die genannten Nachteile nicht aufweist und Stromausbeuten von mindestens 80 % ermöglicht.

Dieses Ziel wird bei einem Verfahren der eingangs beschriebenen Art erfindungsgemäß dadurch erreicht, daß die Elektrolytlösungen durch mindestens vier in Serie arbeitenden 3-Kammer-Elektrolysezellen geleitet werden und zumindest am Beginn der Elektrolysezellen-Serie ausschließlich durch Kationenaustauschermembranen dialysiert werden und daß die Elektrolytlösung der Mittelkammer der letzten Zelle der Serie in die Anodenkammer der ersten Zelle rückgeführt wird.

Die erfindungsgemäße Prozeßführung führt zu einer $H_2SO_4$-Konzentration von bis zu 25 % und einer wesentlich verbesserten Stromausbeute von mindestens 80 % im Anolyt-Endprodukt. Dazu kommt noch, daß infolge höherer Stromausbeuten nicht nur die Energiekosten für das Elektrolyseverfahren, sondern auch die Investitionskosten für die Vorrichtung erheblich gesenkt werden können.

Weiters ist es von Vorteil, wenn die Elektrolytlösungen nach Passieren der Elektrodialysezellen, die ausschließlich Kationenaustauschermembranen enthalten, zumindest noch in einer weiteren, sowohl eine Kationen- als auch eine Anionenaustauschermembran enthaltenden Zelle dialysiert werden, d.h. wenn zur Abgrenzung der Anoden- von der Mittelkammer eine Anionenaustauschermembran und nicht eine Kationenaustauschermembran - wie in den ersten Zellen der Serie - verwendet wird. Durch diese Maßnahme wird eine zu starke Verschiebung des $H+/Me+$ -Verhältnisses zugunsten der $H+$ -Konzentration vermieden.

Wegen der mehr oder weniger hohen Empfindlichkeit der Anionenaustauschermembran gegenüber Alkalien ist es dabei entscheidend, daß sie stets nur bei jenen Zellen zum Einsatz kommt, bei denen ein Überschreiten des jeweils vom Hersteller der Anionenaustauschermembran angegebenen pH-Limits in der Mittelkammer ausgeschlossen ist.

Wird die Elektrolytlösung rückgeführt, bevor 50 % des Sulfates als Schwefelsäure vorliegen, wird der unerwunschten Abwanderung von Säure aus der Mittelkammer in die Kathodenkammer entgegengewirkt, weil bei einer 50 %igen Umwandlung des Sulfates in Schwefelsäure eine Pufferwirkung des Systems $Me_2SO_4/H_2SO_4$ ausgenützt werden kann. Durch das Abpuffern der $H_3O+$ -Ionen wird nämlich die Konzentration an freiem $H_3O+$ wesentlich verringert und somit auch deren Abwanderung reduziert.

Mit dem erfindungsgemäßen Verfahren können insbesondere auch Spinnbadlösungen, die bei der Verarbeitung regenerierter Cellulose nach dem Xanthogenatprozeß anfallen, mitverarbeitet werden, wobei es sich gezeigt hat, daß die Spinnbadlösungen am besten in die Anodenkammer der ersten Zelle der Serie eingebracht werden.

Das erfindungsgemäße Verfahren kann kontinuierlich durchgeführt werden.

Die Erfindung betrifft auch eine Vorrichtung zur Durchführung des Verfahrens mit einer Mehrzahl von in Serie arbeitenden 3-Kammer-Elektrolysezellen, welche jeweils eine Anoden-, eine Mittel- und eine Kathodenkammer aufweisen, die durch zwei Ionenaustauschermembranen voneinander getrennt sind, wobei die Mittelkammer der ersten Zelle der Serie eine Zuführung für alkalisulfathältige Lösungen und die Kathodenkammer eine Leitung für Wasser bzw. verdünnte Alkalilauge besitzt, die Anodenkammer der letzten Zelle der Serie eine Ableitung für verdünnte Schwefelsäure und die Kathodenkammer der letzten Zelle der Serie eine Leitung für Wasser bzw. verdünnte Alkalilauge aufweisen.

Die erfindungsgemäße Vorrichtung ist dadurch gekennzeichnet, daß die Elektrolysezellen-Serie aus mindestens vier 3-Kammer-Elektrolysezellen besteht und zumindest am Beginn Elektrolysezellen besitzt, die ausschließlich Kationenaustauschermembranen als Ionenaustauschermembranen enthalten, daß die Mittelkammer der letzten Zelle der Serie leitungsmäßig mit der Anodenkammer der ersten Zelle verbunden ist und daß die Anodenkammer der ersten Zelle gegebenenfalls eine Zuleitung für Spinnbadlösungen besitzt.

Vorteilhaft besitzt die erfindungsgemäße Vorrichtung nach den ausschließlich Kationenaustauschermembranen enthaltenden Elektrolysezellen zumindest noch eine weitere, in Serie verbundene Zelle mit einer Kationen- und einer Anionenaustauschermembran.

Es hat sich als günstig herausgestellt, wenn der erste Teil eine Gruppe von drei bis fünf Elektrolysezellen mit ausschließlich Kationenaustauschermembranen umfaßt und in Serie mit einer zweiten Gruppe von drei bis fünf Elektrolysezellen verbunden ist, die sowohl eine Kationen- als auch eine Anionenaustauschermembran enthalten.

Zur Erzielung besonders hoher Stromausbeuten besitzt die erfindungsgemäße Vorrichtung Ionenaustauschermembranen mit unterschiedlicher Ionenselektivität, wobei jene Zelle, deren Katholyt den niedrigsten pH-Wert aufweist, Membranen mit dem niedrigsten Durchlaßwiderstand besitzt, und jene Zelle, deren Katholyt den höchsten pH-Wert aufweist, Membranen mit dem höchsten Durchlaßwiderstand besitzt.

Anhand der Zeichnung wird eine Ausführungsform der Erfindung näher erläutert.

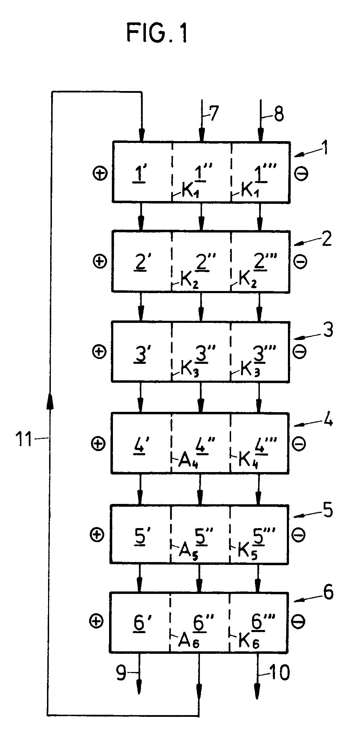

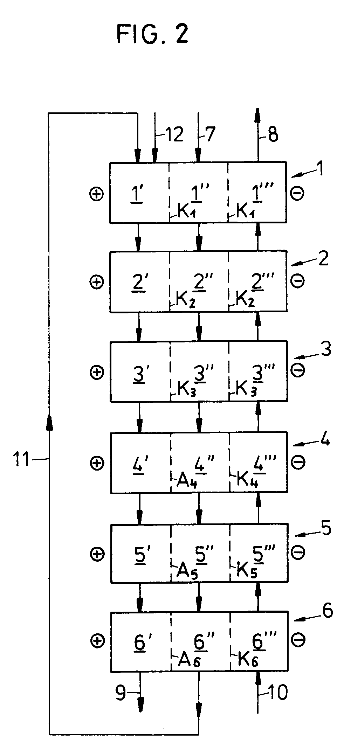

In den Fig. 1 und 2 werden mit den Bezugszeichen 1 bis 6 sechs in Serie geschaltete 3-Kammer-Elektrolysezellen bezeichnet, die jeweils eine Anoden- (1' bis 6') eine Mittel- (1" bis 6") und eine Kathodenkammer (1''' bis 6''') aufweisen, welche entweder nur durch Kationenaustauschermembranen $(K_{1-3})$ oder sowohl durch Anionen- $(A_{4-6})$ als auch durch Kationenaustauschermembranen $(K_{4-6})$ voneinander getrennt sind. Die in der ersten Zelle verwendeten zwei Kationenaustauschermembranen $K_1$ können sowohl aus identischem als auch verschiedenem Material bestehen. Dasselbe gilt auch für die anderen Zellen.

Mit + und - werden in allen Zellen Anode und Kathode bzw. die Zufuhr der elektrischen Energie angedeutet.

Als Elektrodenmaterialien eignen sich für die Kathode Stahl oder Nickel als Netz- oder Streckmetall und für die Anode Blei-Silber-Legierungen, Platin sowie Titan oder Tantal, welche mit Platin oder mit anderen Edelmetallen und deren Oxiden beschichtet sind, letztere vorzugsweise ebenfalls wieder als Netz oder Streckmetall. Die Elektroden sollen in möglichst geringem bzw. Nullabstand zu den jeweiligen Membranen angeordnet sein.

Als Kationenaustauschermembranen $(K_{1-6})$ können z.B. Nafion (Hersteller: Dupont), MC-3470 (Hersteller: Sybron) oder R 1010, R 4010 (Hersteller: RAI) und als Anionenaustauschermembranen $(A_{4-6})$ z.B. MA-3475 (Hersteller: Sybron), R 1030 (Hersteller: RAI) oder IE DF 34 (Hersteller: TOSOH Corp.) verwendet werden.

Werden als alkalisulfathältige Lösungen keine Spinnbadlösungen verwendet, so erfolgt die Elektrolytanspeisung gemäß Fig. 1 derart, daß die Ausgangslösungen in die Mittelkammer 1" der ersten Zelle 1 geleitet (7) werden. Wasser bzw. eine verdünnte Alkalilösung wird in die Kathodenkammer 1''' geleitet (8). In der Folge durchfließen diese Lösungen die entsprechenden gleichnamigen Kammern (2" bis 6") bzw. (2''' bis 6''') der nachgeordneten Zellen (2 bis 6). Der zwischen den gleichnamigen Kammern der Zellen stattfindende Elektrolytfluß (Anolyt-, Mittelkammerelektrolyt- und Katholytfluß) ist in der Zeichnung schematisch durch Pfeile dargestellt.

Beim Durchfluß kommt es zu einer stufenweisen Anreicherung der Säure im Mittelkammerelektrolyten und der Lauge im Katholyten. Die Lauge kann aus der letzten Zelle 6 der Serie bereits mit der Endkonzentration abgezogen werden (10). Der Mittelkammerelektrolyt wird über die Leitung 11 in die Anodenkammer 1' der ersten Zelle 1 eingespeist, um erneut die gesamte Zahl der Zellen, jetzt aber anodenseitig, durchlaufen zu können. Dadurch wird eine weitere Aufkonzentrierung an Schwefelsäure erzielt, welche schließlich aus der Anodenkammer 6' über die Leitung 9 abgezogen werden kann.

Zur zusätzlichen Verarbeitung von alkalisulfathältigen Spinnbadlösungen werden diese gemäß der in Fig. 2 dargestellten weiteren Ausführungsform der Erfindung in die Anodenkammer der ersten Zelle der Serie eingespeist. Es hat sich gemäß dieser Ausführungsform als zweckmäßig erwiesen, den Katholytfluß in Gegenrichtung zum Anolyt- und Mittelkammerelektrolytfluß zu führen, d.h. Wasser bzw. verdünnte Alkalilauge nicht in die Kathodenkammer 1''' der ersten Zelle 1, sondern der letzten Zelle 6 der Serie einzuspeisen und die aufkonzentrierte Lauge somit aus der ersten Zelle 1 der Serie abzuziehen. Der umgekehrte Katholytfluß ist in Fig. 2 mit Pfeilen symbolisiert.

In den Kammern laufen folgende Vorgänge ab:

Kathodenkammer:

An der Kathode (-) entsteht infolge Wasserzersetzung gasförmiger Wasserstoff und Hydroxylionen. Gleichzeitig wandern die Kationen des Salzes von der gegenüberliegenden Kationenaustauschermembran zu, so daß es zur Laugenbildung kommt.

Anodenkammer:

Infolge Wasserzersetzung entstehen gasförmiger Sauerstoff und Wasserstoffionen, welche mit den Sulfationen Schwefelsäure bilden. Die Verfügbarkeit eben dieser Sulfationen kommt dabei je nach Art der die Anodenkammer begrenzenden Membran auf unterschiedliche Weise zustande. Bei Verwendung von Kationenaustauschermembranen dadurch, daß Kationen laufend in die Mittelkammer abwandern, und bei einer Anionenaustauschermembran dadurch, daß Sulfationen aus der Mittelkammer zuwandern.

Mittelkammer:

Die Mittelkammer ist vom Kathodenraum in allen Zellen durch eine Kationenaustauschermembran getrennt. Die Trennung vom Anodenraum erfolgt in den ersten drei Zellen 1 bis 3 durch eine Membran vom Kationentyp und in den letzten drei Zellen 4 bis 6 durch eine Membran vom Anionentyp. Im Falle der Verwendung einer Kationenaustauschermembran wandern ebensoviele Kationen, sowohl Alkali- als auch Wasserstoffionen, von der Anodenseite zu wie zur Kathodenseite Kationen, vorwiegend Alkaliionen, abwandern. Die Säurekonzentration nimmt folglich zu. Bei Verwendung von Anionenaustauschermembranen wandern ebensoviele Anionen in die Anodenkammer wie Kationen in den Kathodenraum. Die Säurekonzentration bleibt folglich im wesentlichen konstant. Da die Wanderung der Ionen stets unter Mitnahme einer Hydrathülle erfolgt, kommt es hierbei gleichzeitig auch zu deutlichen Volumsveränderungen der Elektrolytströme.

Mit den folgenden Beispielen wird die Erfindung noch näher beschrieben.

Beispiel 1:

Die Elektrolysevorrichtung bestand aus insgesamt sieben Zellen, welche nach dem in der Zeichnung dargestellten Schema in Serie verbunden waren. Die einzelnen Zellen waren folgendermaßen aufgebaut:

Die Kathode bestand aus einem Nickelnetz, dazu im Nullabstand befand sich die Kationenaustauschermembran Nafion 117, auf welcher dann, durch einen 2 mm-Spacer getrennt, die Membran Nafion 430 folgte. Letztere stand ihrerseits wieder im Nullabstand zur Anode, einem mit Platin beschichteten Titanstreckmetall; die aktive Fläche betrug jeweils 60 cm². Die Stromversorgung erfolgte über einen Gleichrichter, u.zw. derart, daß eine Stromdichte von konstant 30 A/dm² gehalten wurde. Die Elektrolytlösungen wurden erwärmt, so daß in den Zellen eine Temperatur von ca. 70°C erreicht wurde.

Die Mittelkammer der ersten Zelle wurde mit etwa 27 Gew.%iger $Na_2SO_4$-Lösung und der Kathodenraum ebendieser Zelle mit 1,4 Gew.%iger NaOH beschickt. Die Produktlösungen wurden aus dem Anoden- und Kathodenraum der letzten Zelle abgezogen. Der Mittelkammerablauf aus der letzten Zelle wurde in den Anodenraum der ersten Zelle rückgeführt.

Der Mengendurchsatz betrug:

**Katholyt:**

| | | |
|---|---|---|
| Zulauf: | 1200 g/h | 1,4 Gew.% NaOH |
| Ablauf: | 1571 g/h | 10,7 Gew.% NaOH |

**Mittelkammer:**

| | | |
|---|---|---|
| Zulauf: | 1345 g/h | 27 Gew.% $Na_2SO_4$ |
| Ablauf: | 1317 g/h | 6,8 Gew.% $H_2SO_4$ |

**Anolyt:**

| | | |
|---|---|---|
| Zulauf: | Ablauf aus Mittelkammer des 7. Elektrolyseurs | |
| Ablauf: | 970 g/h | 19,1 Gew.% $H_2SO_4$ und 9,5 Gew.% $Na_2SO_4$ |

| | |
|---|---|
| durchschnittliche Spannung pro Zelle: | 4,21 V |
| durchschnittliche Stromausbeute: | 80,4 % |
| Strombedarf: | 3,51 kWh/kg NaOH |

Beispiel 2:

Die Elektrolysevorrichtung bestand aus insgesamt vier Zellen, welche nach dem in der Zeichnung dargestellten Schema in Serie geschaltet waren. Alle hierbei verwendeten Zellen waren von genau der gleichen Konstruktion und Größe, wie im Beispiel 1 beschrieben, mit dem Unterschied, daß anodenseitig als Membran Nafion 430 und kathodenseitig Nafion 324 verwendet wurde. Auch die Temperatur und die Stromdichte wurden gleich gehalten.

Die erste Zelle wurde mit den Ausgangslösungen 27 Gew.%ige $Na_2SO_4$-Lösung (in die Mittelkammer) und 1,5 Gew.%ige Natronlauge (in die Kathodenkammer) beschickt und aus der letzten Zelle die Produktlösungen $H_2SO_4/Na_2SO_4$ (aus dem Anodenraum) und NaOH (aus dem Kathodenraum) abgezogen.

Der Mittelkammerablauf aus der letzten Zelle wurde wieder in den Anodenraum der ersten Zelle zurückgeleitet.

Der Mengendurchsatz betrug:

### Katholyt:

| | | |
|---|---|---|
| Zulauf: | 250 g/h | 1,5 Gew.% NaOH |
| Ablauf: | 493 g/h | 19,1 Gew.% NaOH |

### Mittelkammer:

| | | |
|---|---|---|
| Zulauf: | 730 g/h | 27 Gew.% $Na_2SO_4$ |
| Ablauf: | 697 g/h | 9,2 Gew.% $H_2SO_4$ |

### Anolyt:

| | | |
|---|---|---|
| Zulauf: | Ablauf aus Mittelkammer des 4. Elektrolyseurs | |
| Ablauf: | 481 g/h | 23,0 Gew.% $H_2SO_4$ und 7,5 Gew.% $Na_2SO_4$ |

| | |
|---|---|
| durchschnittliche Spannung pro Zelle: | 4,51 V |
| durchschnittliche Stromausbeute: | 84,1 % |
| Strombedarf: | 3,59 kWh/kg NaOH |

Beispiel 3:

Die Elektrolysevorrichtung bestand aus insgesamt sieben Zellen, welche nach dem in der Zeichnung dargestellten Schema in Serie geschaltet waren.

Im Gegensatz zu den Beispielen 1 und 2 waren die Zellen jedoch zum Teil mit unterschiedlichen Membranen und auch Anoden bestückt:

Die erste Zelle wurde wieder mit den Ausgangslösungen 27 Gew.%ige $Na_2SO_4$-Lösung (in die Mittelkammer) und 1,5 Gew.%ige Natronlauge (in die Kathodenkammer) beschickt und aus der letzten Zelle die Produktlösungen $H_2SO_4/Na_2SO_4$ (aus dem Anodenraum) und Natronlauge (aus dem Kathodenraum) abgezogen. Der Mittelkammerablauf aus der

| | Membran | | Anode |
|---|---|---|---|
| | anodenseitig | kathodenseitig | |
| Zellen 1, 2 | Nafion 117 (Kationmembran) | Nafion 117 (Kationmembran) | platin-beschichtetes Tantal |
| Zelle 3 | Nafion 117 (Kationmembran) | Nafion 324 (Kationmembran) | platin-beschichtetes Titan |
| Zellen 4 - 7 | R-4030 (Anionmembran) | Nafion 324 (Kationmembran) | platin-beschichtetes Titan |

letzten Zelle wurde in den Anodenraum der ersten Zelle gespeist. Die Temperatur betrug ca. 70°C, die Stromdichte 30 A/dm$^2$.

Der Mengendurchsatz war wie folgt:

**Katholyt:**

| Zulauf: | 430 g/h | 1,4 Gew.% NaOH |
|---|---|---|
| Ablauf: | 807 g/h | 21,4 Gew.% NaOH |

**Mittelkammer:**

| Zulauf: | 1360 g/h | 27 Gew.% $Na_2SO_4$ |
|---|---|---|
| Ablauf: | 1054 g/h | 2,3 Gew.% $H_2SO_4$ |

**Anolyt:**

Zulauf: Ablauf aus Mittelkammer der 7. Elektrolytzelle

Ablauf: 977 g/h 20,9 Gew.% $H_2SO_4$ und 7,9 Gew.% $Na_2SO_4$

durchschnittliche Spannung pro Zelle: 4,45 V

durchschnittliche Stromausbeute: 88,6 %

Strombedarf: 3,37 kWh/kg NaOH

Beispiel 4:

Die Elektrolysevorrichtung bestand aus insgesamt sechs Zellen, welche entsprechend dem in der Fig. 2 darstellten Schema in Serie geschaltet waren.

Alle hierbei verwendeten Zellen waren wieder von der gleichen Größe und Konstruktion, wie im Beispiel 1 beschrieben, unterschieden sich jedoch in den eingesetzten Membranen: anodenseitig waren sämtliche Zellen mit Nafion 117 versehen; kathodenseitig waren Zelle 3 bis 6 ebenfalls mit Nafion 117, Zelle 1 und 2 hingegen mit Nafion 324 bestückt. Die Temperatur betrug 70°C, die Stromdichte 30 A/dm$^2$.

Wie bei den Beispielen 1 bis 3 beschrieben, wurde die Mittelkammer der ersten Zelle mit einer etwa 27

7

Gew.%igen Na$_2$SO$_4$-Lösung beschickt und der Mittelkammer-Ablauf aus der letzten Zelle in den Anodenraum der ersten Zelle übergeführt. Zusätzlich wurde in diesen Anodenraum noch eine Spinnbadlösung, wie sie bei der Verarbeitung regenerierter Cellulose nach dem Xanthogenatprozeß anfällt, eingespeist, welche 4,4 Gew.% H$_2$SO$_4$ und 19,4 Gew.% Na$_2$SO$_4$ enthielt. Das Einspeisungsverhältnis von Mittelkammer-Ablauf und Spinnbadlösung betrug 1 : 1,4. Im Gegensatz zu den Beispielen 1 bis 3 wurde der Katholyt im Gegenstrom zu den beiden anderen Elektrolytströmen geführt, d.h. die verdünnte NaOH (ca. 1,5 Gew.%ig) wurde in den Kathodenraum 6''' der letzten Zelle 6 eingespeist, von wo aus sie nacheinander durch die Kathodenkammern der übrigen Zellen geführt wurde. Die konzentrierte Lauge wurde aus der Kathodenkammer 1''' der ersten Zelle 1 abgezogen.

Der Mengendurchsatz war wie folgt:

**Katholyt:**

| | | |
|---|---|---|
| Zulauf: | 880 g/h | 1,5 Gew.% NaOH |
| Ablauf: | 1215 g/h | 12,1 Gew.% NaOH |

**Mittelkammer:**

| | | |
|---|---|---|
| Zulauf: | 880 g/h | 27 Gew.% Na$_2$SO$_4$ |
| | | 0 Gew.% H$_2$SO$_4$ |
| Ablauf: | 807 g/h | 22,1 Gew.% Na$_2$SO$_4$ |
| | | 5,1 Gew.% H$_2$SO$_4$ |

**Anolyt:**

| | | |
|---|---|---|
| Zulauf: | Mittelkammer-Ablauf aus Zelle 6 | 20,5 Gew.% Na$_2$SO$_4$ |
| | + 1130 g/h Spinnbad | 4,7 Gew.% H$_2$SO$_4$ |
| Ablauf: | 1663 g/h | 13,5 Gew.% Na$_2$SO$_4$ |
| | | und |
| | | 12,8 Gew.% H$_2$SO$_4$ |

| | |
|---|---|
| durchschnittliche Spannung pro Zelle: | 4,33 V |
| durchschnittliche Stromausbeute: | 83 % |
| Strombedarf: | 3,50 kWh/kg NaOH |

**Patentansprüche**

1. Verfahren zur stufenweisen Membran-Elektrolyse von alkalisulfathältigen, wässerigen Lösungen, wobei diese Lösungen durch eine Mehrzahl von in Serie arbeitenden 3-Kammer-Elektrolysezellen geleitet werden, welche jeweils eine Anoden-, eine Mittel- und eine Kathodenkammer aufweisen, die durch zwei Ionenaustauschermembranen voneinander getrennt sind, und die alkalisulfathältigen Lösungen zumindest teilweise in die Mittelkammer der ersten Elektrolysezelle eingebracht werden, dadurch gekennzeichnet, daß die Elektrolytlösungen durch mindestens vier in Serie arbeitenden 3-Kammer-Elektrolysezellen geleitet werden und zumindest am Beginn der Elektrolysezellen-Serie ausschließlich durch Kationenaustauschermembranen (K$_{1-3}$) dialysiert werden und daß die Elektrolytlösung der Mittelkammer (6''') der letzten Zelle (6) der Serie in die Anodenkammer (1') der ersten Zelle (1) rückgeführt wird.

**2.** Verfahren nach Anspruch 1, wobei die Elektrolytlösung nach Passieren der Elektrolysezellen, die ausschließlich Kationenaustauschermembranen ($K_{1-3}$) enthalten, zumindest noch in einer weiteren, sowohl eine Kationen-($K_{4-6}$) als auch eine Anionenaustauschermembran ($A_{4-6}$) enthaltenden Zelle dialysiert werden.

**3.** Verfahren nach einem der Ansprüche 1 oder 2, wobei als alkalisulfathältige wässerige Lösung teilweise Spinnbadlösungen verwendet werden, die bei der Verarbeitung regenerierter Cellulose nach dem Xanthogenatprozeß anfallen, und wobei die Spinnbadlösungen in die Anodenkammer (1') der ersten Zelle der Serie eingebracht werden.

**4.** Verfahren nach einem oder mehreren der Ansprüche 1 bis 3, dadurch gekennzeichnet, daß es kontinuierlich durchgeführt wird.

**5.** Vorrichtung zur Durchführung des Verfahrens nach einem der Ansprüche 1 bis 4, mit einer Mehrzahl von in Serie arbeitenden 3- Kammer-Elektrolysezellen (1 bis 6), welche jeweils eine Anoden- (1' bis 6'), eine Mittel- (1'' bis 6'') und eine Kathodenkammer (1''' bis 6''') aufweisen, die durch zwei Ionenaustauschermembranen ($A_{4-6}$, $K_{1-6}$) voneinander getrennt sind, wobei die Mittelkammer (1'') der ersten Zelle (1) der Serie eine Zuführung (7) für alkalisulfathältige Lösungen und die Kathodenkammer (1''') eine Leitung (8) für Wasser bzw. verdünnte Alkalilauge besitzt, die Anodenkammer (6') der letzten Zelle (6) der Serie eine Ableitung (9) für verdünnte Schwefelsäure und dieKathodenkammer (6''') der letzten Zelle (6) der Serie eine Leitung (10) für Wasser bzw. verdünnte Alkalilauge aufweisen, dadurch gekennzeichnet, daß die Elektrolysezellen-Serie aus mindestens vier 3-Kammer-Elektrolysezellen besteht und zumindest am Beginn Elektrolysezellen besitzt, die ausschließlich Kationenaustauschermembranen ($K_{1-3}$) als Ionenaustauschermembranen enthalten, daß die Mittelkammer (6'') der letzten Zelle (6) der Serie leitungsmäßig (11) mit der Anodenkammer (1') der ersten Zelle (1) verbunden ist und daß die Anodenkammer (1') der ersten Zelle (1) gegebenenfalls eine Zuleitung (12) für Spinnbadlösungen besitzt.

**6.** Vorrichtung nach Anspruch 5, wobei nach den ausschließlich Kationenaustauschermembranen ($K_{1-3}$) enthaltenden Elektrolysezellen zumindest noch eine weitere Zelle in Serie verbunden ist, welche eine Kationen-($K_{4-6}$) und einen Anionenaustauschermembran ($A_{4-6}$) besitzt.

**7.** Vorrichtung nach Anspruch 6, wobei die Elektrolysezellen-Serie eine Gruppe von drei bis fünf Elektroysezellen mit ausschließlich Kationenaustauschermembranen umfaßt, welche Gruppe in Serie mit einer zweiten Gruppe von drei bis fünf Elektrolysezellen verbunden ist, die sowohl eine Kationen- als auch eine Anionenaustauschermembran enthalten.

**8.** Vorrichtung nach einem oder mehreren der Ansprüche 5 bis 7, welche Ionenaustauschermembranen mit unterschiedlicher Ionenselektivität enthalten, wobei jene Zelle, deren Katholyt den niedrigsten pH-Wert aufweist, Membranen mit dem niedrigsten Durchlaßwiderstand besitzt, und jene Zelle, deren Katholyt den höchsten pH-Wert aufweist, Membranen mit dem höchsten Durchlaßwiderstand besitzt.

## Claims

**1.** Process for the stepwise membrane-electrolysis of aqueous solutions containing alkali sulphate, whereby these solutions are led through a multiplicity of 3-chamber electrolysis cells operating in series wherein each cell has an anode chamber, a middle chamber and a cathode chamber which are separated from one another by two ion exchange membranes, and the solutions containing alkali sulphate are introduced at least partly into the middle chamber of the first electrolysis cell, characterised in that, the electrolyte solutions are led through at least four 3-chamber electrolysis cells operating in series and at least at the start of the series of electrolysis cells they are dialysed exclusively by cationic exchange membranes ($K_{1-3}$), and that the electrolyte solution from the middle chamber (6''') of the last cell (6) of the series is returned to the anode chamber (1') of the first cell (1).

**2.** Process in accordance with Claim 1, whereby the electrolyte solutions after passage through the electrolysis cells which exclusively contain cationic exchange membranes ($K_{1-3}$), are dialysed in at least one other cell containing not only a cationic exchange membrane ($K_{4-6}$) but also an anionic exchange membrane ($A_{4-6}$).

9

3. Process in accordance with one of the Claims 1 or 2, whereby as the aqueous solution containing alkali sulphate, partial use is made of spinning bath solutions which occur in the processing of regenerated cellulose according to the xanthogenate process, and whereby the spinning bath solutions are introduced into the anode chamber (1') of the first cell of the series.

4. Process in accordance with one of the Claims 1 to 3, characterised in that, it is carried out continuously.

5. Device for carrying out the process according to one of the Claims 1 to 4, with a multiplicity of 3-chamber electrolysis cells (1 to 6) operating in series with each cell having an anode chamber (1' to 6'), a middle chamber (1" to 6") and a cathode chamber (1''' to 6'''), which are separated from one another by two ion exchange membranes ($A_{4-6}$, $K_{1-6}$), whereby the middle chamber (1") of the first cell (1) of the series has an inlet (7) for solutions containing alkali sulphate and the cathode chamber (1''') has a pipe (8) for water or for dilute caustic soda respectively, the anode chamber (6 ) of the last cell (6) of the series has an outlet (9) for dilute sulphuric acid and the cathode chamber (6''') of the last cell (6) of the series has a pipe (10) for water or for dilute caustic soda respectively, characterised in that, the series of electrolysis cells consists of at least four 3-chamber electrolysis cells and at the start at least it has electrolysis cells which exclusively contain cationic exchange membranes ($K_{1-3}$) as ionic exchange membranes; the middle chamber (6") of the last cell (6) of the series is connected by a pipe (11) to the anode chamber (1') of the first cell (1); and the anode chamber (1') of the first cell (1) optionally has an inlet (12) for spinning bath solutions.

6. Device in accordance with Claim 5, whereby after the electrolysis cells containing exclusively cationic exchange membranes ($K_{1-3}$), at least one further cell is connected in series which has a cationic exchange membrane ($K_{4-6}$) and an anionic exchange membrane ($A_{4-6}$).

7. Device in accordance with Claim 6, whereby the series of electrolysis cells includes a group of three to five electrolysis cells having exclusively cationic exchange membranes, and this group is connected in series to a second group of three to five electrolysis cells having not only a cationic exchange membrane but also an anionic exchange membrane.

8. Device in accordance with one or more of the Claims 5 or 7, which contains ion exchange membranes with varying ionic selectivities, whereby that cell whose catholyte has the lowest pH value possesses membranes with the lowest resistance to permeability, and that cell whose catholyte has the highest pH value possesses membranes with the highest resistance to permeability.

## Revendications

1. Procédé pour l'électrolyse progressive sur membrane de solutions aqueuses contenant un sulfate alcalin, dans lequel ces solutions sont envoyées dans plusieurs cellules d'électrolyse à trois compartiments fonctionnant en série, qui présentent chacune un compartiment anodique, un compartiment moyen et un compartiment cathodique, qui sont séparés les uns des autres par deux membranes échangeuses d'ions et les solutions contenant un sulfate alcalin sont introduites au moins partiellement dans le compartiment moyen de la première cellule d'électrolyse, caractérisé en ce que les solutions d'électrolyte sont envoyées dans au moins quatre cellules d'électrolyse à trois compartiments fonctionnant en série et sont dialysées au moins au début de la série de cellules d'électrolyse exclusivement à travers des membranes échangeuses de cations ($K_{1-3}$) et en ce que la solution d'électrolyte du compartiment moyen (6''') de la dernière cellule (6) de la série est recyclée dans le compartiment anodique (1') de la première cellule (1).

2. Procédé selon la revendication 1, dans lequel la solution d'électrolyte, après passage dans les cellules d'électrolyse qui contiennent exclusivement des membranes échangeuses de cations ($K_{1-3}$), est dialysée encore dans au moins une autre cellule contenant une membrane échangeuse de cations ($K_{4-6}$) ainsi également qu'une membrane échangeuse d'anions (A4-6).

3. Procédé selon la revendication 1 ou 2, dans lequel on utilise en partie comme solution aqueuse contenant un sulfate alcalin des solutions de bain de filage qui se forment dans le traitement de la cellulose régénérée par le procédé au xanthogénate et en ce que les solution de bain de filage sont introduites dans le compartiment anodique (1') de la première cellule de la série.

4. Procédé selon une ou plusieurs des revendications 1 à 3, caractérisé en ce qu'il est mis en oeuvre en continu.

5. Appareil pour la mise en oeuvre du procédé selon l'une des revendications 1 à 4, avec plusieurs cellules d'électrolyse à trois compartiments fonctionnant en série (1 à 6), qui présentent chacune un compartiment anodique (1' à 6'), un compartiment moyen (1" à 6") et un compartiment cathodique (1''' à 6'''), qui sont séparés les uns des autres par deux membranes échangeuses d'ions ($A_{4-6}$, $K_{1-6}$), le compartiment moyen (1") de la première cellule (1) de la série possédant une conduite d'alimentation (7) pour les solutions contenant un sulfate alcalin et le compartiment cathodique (1''') possédant une conduite (8) pour l'eau ou la lessive alcaline diluée, le compartiment anodique (6') de la dernière cellule (6) de la série présente une conduite d'évacuation (9) pour l'acide sulfurique dilué et le compartiment cathodique (6''') de la dernière cellule (6) de la série une conduite (10) pour l'eau ou la lessive alcaline diluée, caractérisé en ce que la série de cellules d'électrolyse consiste en au moins quatre cellules d'électrolyse à trois compartiments et comprend au moins au début des cellules d'électrolyse qui contiennent exclusivement des membranes échangeuses de cations ($K_{1-3}$) comme membranes échangeuses d'ions, en ce que le compartiment moyen (6") de la dernière cellule (6) de la série est relié dans le sens du courant (11) avec le compartiment anodique (1') de la première cellule (1) et en ce que le compartiment anodique (1') de la première cellule (1) possède éventuellement une conduite d'alimentation (12) pour les solutions de bain de filage.

6. Appareil selon la revendication 5, dans lequel, après les cellules d'électrolyse contenant exclusivement des membranes échangeuses de cations ($K_{1-3}$), au moins une autre cellule est reliée en série, qui possède une membrane échangeuse de cations ($K_{4-6}$) et une membrane échangeuse d'anions ($A_{4-6}$).

7. Procédé selon la revendication 6, dans lequel la série de cellules d'électrolyse comprend un groupe de 3 à 5 cellules d'électrolyse ayant exclusivement des membranes échangeuses de cations, ce groupe étant relié en série avec un deuxième groupe de 3 à 5 cellules d'électrolyse qui contiennent une membrane échangeuse de cations ainsi également qu'une membrane échangeuse d'anions.

8. Appareil selon une ou plusieurs des revendications 5 à 7, qui contient des membranes échangeuses d'ions de sélectivités ioniques différentes, la cellule dont le catholyte présente le pH le plus bas possédant des membranes de résistance au passage la plus basse et la cellule dont le catholyte présente le pH le plus élevé possédant des membranes de résistance au passage la plus élevée.

# FIG.1

# FIG. 2